(19) Europäisches Patentamt
European Patent Office
Office européen des brevets

(11) **EP 4 644 491 A1**

(12) **EUROPEAN PATENT APPLICATION**

(43) Date of publication:
**05.11.2025 Bulletin 2025/45**

(21) Application number: **25171615.5**

(22) Date of filing: **22.04.2025**

(51) International Patent Classification (IPC):
*C09C 1/48* (2006.01)      *C09C 1/56* (2006.01)
*H01M 4/13* (2010.01)      *H01M 4/62* (2006.01)
*H01M 4/90* (2006.01)      *H01M 8/00* (2016.01)

(52) Cooperative Patent Classification (CPC):
**C09C 1/56; C09C 1/48; C09C 1/565; H01M 4/625;
H01M 4/9083;** C01P 2002/60; C01P 2006/12;
C01P 2006/16; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.04.2024 CN 202410483522**

(71) Applicant: **Jiaozuo City Hexing Chemical Industry
Co., Ltd.
Jiaozuo, Henan 454150 (CN)**

(72) Inventors:
• **GUO, Ning**
  **Jiaozuo, 454150 (CN)**
• **YANG, Ningning**
  **Jiaozuo, 454150 (CN)**
• **YANG, Haiyang**
  **Jiaozuo, 454150 (CN)**

• **SUN, Tiantian**
  **Jiaozuo, 454150 (CN)**
• **QIN, Ruizhi**
  **Jiaozuo, 454150 (CN)**
• **TIAN, Pei**
  **Jiaozuo, 454150 (CN)**
• **SUO, Rong**
  **Jiaozuo, 454150 (CN)**
• **LIU, Xinsheng**
  **Jiaozuo, 454150 (CN)**
• **JIA, Shuili**
  **Jiaozuo, 454150 (CN)**
• **JIANG, Zhihang**
  **Jiaozuo, 454150 (CN)**

(74) Representative: **Eisenführ Speiser
Patentanwälte Rechtsanwälte PartGmbB
Postfach 10 60 78
28060 Bremen (DE)**

(54) **ULTRA-HIGH STRUCTURE AND HIGH SPECIFIC SURFACE AREA CARBON BLACK BASED ON HIGH CRYSTALLINITY AND PREPARATION METHOD THEREOF, ELECTRODE SLURRY, AND BATTERY**

(57) Provided is an ultra-high structure and high specific surface area carbon black based on high crystallinity and a preparation method thereof, an electrode slurry, and a battery. The ultra-high structure and high specific surface area carbon black based on high crystallinity satisfies the following characteristics: (1) the degree of crystallinity is equal to or more than 39%; (2) the BET specific surface area ranges from 200 $m^2$/g to 763 $m^2$/g; (3) the OAN ranges from 334 mL/100g to 548 mL/100g; and (4) the average particle diameter of primary particles is equal to or less than 35 nm.

10 5.0kV 8.5mm x20.0k SE(UL)                    2.00um

FIG. 1

## Description

### Technical Field

The present disclosure relates to the technical field of carbon black materials, and in particular, to an ultra-high structure and high specific surface area carbon black based on high crystallinity and a preparation method thereof, an electrode slurry, and a battery.

### Background Art

In recent years, carbon black has been widely used in battery fields such as lithium-ion secondary batteries and fuel cells. The general structure of a lithium-ion secondary battery mainly consists of a positive electrode, a negative electrode, a separator, and an electrolyte. Carbon black is used as a conductive agent to enhance the conductivity of the positive active material. This requires carbon black to have high structure, high crystallinity, and high dispersibility to form a rich conductive network and achieve good intrinsic conductivity. In fuel cells, carbon black serves as a catalyst carrier, and the carrier particles should have a high surface area to maximize reactant/catalyst contact and improve catalytic efficiency. However, due to corrosion under high potential and high temperature in batteries, even though carbon black is added in small amounts, its specific surface area accounts for a large proportion of the total specific surface area of the formulated powder materials, thus causing major issues in the durability and stability of commonly used carbon black carriers.

For the above reasons, carbon black preferably exhibits high structure, high specific surface area, and high graphitization degree. Furnace carbon black is favored for its high specific surface area, but it suffers from low crystallinity, poor long-term stability, and high impurity content due to difficult removal of raw material impurities, further limiting its long-term stability and application. Additionally, to increase the specific surface area of carbon black, oxidation etching with oxidizing agents such as air, oxygen, ozone, or water vapor is typically performed at 500°C to 950°C. However, the oxidized carbon black has low crystallinity and requires further high-temperature graphitization treatment. On one hand, the graphitization temperature is approximately 2000°C to 3000°C, leading to high energy consumption. On the other hand, during high-temperature heat treatment, the graphitization degree of carbon black increases, but the carbon black structure collapses, reducing the total (internal) surface area and thus degrading the properties such as electrolyte adsorption and storage. Moreover, the branched structure of oxidized and etched carbon black breaks or dissociates, resulting in no substantial improvement in structure.

The existing product Ketjen black, with a high specific surface area and abundant branched morphology, can achieve high electrical conductivity with a low addition amount, making it suitable for high-end fields such as high-performance batteries and has long held a leading position in the market. However, Ketjen black is prepared by the oil furnace method, which involves lower production temperatures and extensive oxygen exposure, resulting in low crystallinity. Additionally, the average primary particle diameter of Ketjen black is 40 nm, comparable to that of commercially available SP and acetylene carbon black, meaning the number of primary particles per equal mass of carbon black is similar. Furthermore, Ketjen black has high production difficulty, low yield, and high production cost due to its complex manufacturing process.

Given the above, the present disclosure is proposed.

### Summary

The objective of the present disclosure is to provide an ultra-high structure and high specific surface area carbon black based on high crystallinity and a preparation method thereof, an electrode slurry, and a battery. The carbon black of the present disclosure simultaneously has high crystallinity, ultra-high structure and high specific surface area without the need for secondary high-temperature graphitization treatment, and can improve the electrical conductivity and enhance the liquid absorption and retention capacity of materials.

In order to achieve the above objectives of the present disclosure, on the one hand, the present disclosure provides an ultra-high structure and high specific surface area carbon black based on high crystallinity. The carbon black satisfies the following characteristics:

(1) the degree of crystallinity is equal to or more than 39%;

(2) the BET specific surface area ranges from 200 $m^2/g$ to 763 $m^2/g$;

(3) the OAN ranges from 334 mL/100g to 548 mL/100g; and

(4) the average particle diameter of primary particles is equal to or less than 35 nm.

In a specific embodiment of the present disclosure, the microcrystalline size Lc of the carbon black ranges from 20.03 Å to 25.17 Å.

In a specific embodiment of the present disclosure, the microcrystalline size La of the carbon black ranges from 27.8 Å to 37.5 Å.

In a specific embodiment of the present disclosure, the lattice fringes of the primary particles of the carbon black exhibit an irregular conical hat-shaped morphology or ring-shaped morphology.

In a specific embodiment of the present disclosure, the degree of crystallinity of the carbon black ranges from 39% to 46%.

In a specific embodiment of the present disclosure, the aggregate size D50 of the carbon black is equal to or less than 95 nm. Further, the aggregate size D50 of the carbon black is equal to or more than 68 nm.

In a specific embodiment of the present disclosure, the average lattice spacing d(002) of the carbon black is equal to or less than 0.3534 nm, such as 0.3479 nm to 0.3534 nm.

In a specific embodiment of the present disclosure, the average particle diameter of the primary particles of the carbon black ranges from 25 nm to 35 nm.

In a specific embodiment of the present disclosure, the average pore size of the carbon black ranges from 5.86 nm to 9.04 nm.

In a specific embodiment of the present disclosure, the volume of pores with a size of 2 nm to 50 nm in the carbon black measured by nitrogen desorption ranges from 0.3157 $cm^3$/g to 1.2061 $cm^3$/g.

In a specific embodiment of the present disclosure, the proportion of the volume of pores with a size of 2 to 50 nm in the total pore volume of the carbon black ranges from 84.6% to 93.8%.

On the other hand, the present disclosure provides a preparation method of any one of the above-mentioned carbon blacks, comprising the following steps:

subjecting a raw carbon black which has undergone pretreatment to activation and etching treatment, wherein

the activation and etching treatment comprising: heating to a first activation temperature under a protective atmosphere and performing activation treatment under the action of an activation gas; then cooling to a second activation temperature and performing etching treatment under the action of the activation gas; then cooling to room temperature under the protective atmosphere;

the pretreatment comprises: treating the raw carbon black in an aqueous solution containing an oxidant at 30°C to 150°C for 0.5 h to 2 h, then washing and drying;

wherein the first activation temperature ranges from 1100°C to 1500°C, the second activation temperature ranges from 900°C to 1000°C, and the degree of crystallinity of the raw carbon black is equal to or more than 44%.

In a specific embodiment of the present disclosure, the specific surface area of the raw carbon black ranges from 60 $m^2$/g to 150 $m^2$/g. Further, the raw carbon black is acetylene carbon black.

In a specific embodiment of the present disclosure, the activation gas comprises at least one of nitrogen dioxide, nitric oxide, $CO_2$, CO, oxygen, ozone, and water vapor.

In a specific embodiment of the present disclosure, the duration of the activation treatment at the first activation temperature ranges from 10 min to 30 min.

In a specific embodiment of the present disclosure, the duration of the etching treatment at the second activation temperature ranges from 30 min to 70 min.

In a specific embodiment of the present disclosure, the cooling rate during the cooling process ranges from 2 °C/min to 4 °C/min.

In a specific embodiment of the present disclosure, the heating rate during the heating process ranges from 4 °C/min to 6 °C/min.

In a specific embodiment of the present disclosure, the oxidant comprises at least one of hydrogen peroxide and an oxygen-containing acid. Further, the oxygen-containing acid comprises at least one of nitric acid, sulfuric acid, hypochlorous acid, and perchloric acid.

On yet another aspect, the present disclosure provides an electrode slurry, comprising any one of the above-mentioned carbon blacks.

On yet another aspect, the present disclosure provides a secondary battery, comprising a positive electrode, a negative electrode, an electrolyte and a separator, wherein at least one of the positive electrode and the negative electrode is prepared from any one of the above-mentioned electrode slurries.

On yet another aspect, the present disclosure provides a fuel cell, comprising a catalyst, wherein the catalyst comprises a carrier and active catalyst particles supported on the carrier, the carrier comprises any one of the above-mentioned carbon blacks.

Compared with the prior art, the beneficial effects of the present disclosure are as follows:

(1) The carbon black of the present disclosure has high crystallinity, ultra-high structure and high specific surface area. When used as a conductive agent or a carrier, due to the high graphitization degree of the carbon black, it can improve the electrical conductivity and compatibility of the electrode active material with the electrolyte, or enhance the stability of the carrier material to ensure the activity of the catalyst. Meanwhile, the carbon black of the present disclosure has excellent liquid absorption and retention capacity and catalyst loading stability.

(2) The preparation method of the carbon black of the present disclosure uses carbon black with a certain degree of crystallinity as the raw material. It first conducts pretreatment with an oxidant to preliminarily oxidize the carbon black. Then, subsequent activation and etching are carried out to form carbon black with an ultra-high structure and a high specific surface area. Moreover, this method can prevent collapse, enabling the prepared carbon black to possess both the ability to absorb and retain liquid and excellent electrical conductivity.

## Brief Description of Drawings

In order to more clearly illustrate the specific embodiments of the present disclosure or the technical solutions in the prior art, the following will briefly introduce the drawings required for the description of the specific embodiments or the prior art. Obviously, the drawings described below are some embodiments of the present disclosure. For those of ordinary skill in the art, other drawings may be obtained according to these drawings without creative efforts.

FIG.1 is a scanning electron microscope image of the carbon black prepared in Example 3 of the present disclosure;

FIG.2 is a transmission electron microscope image of the carbon black prepared in Example 3 of the present disclosure, where (a)-(c) are transmission electron microscope images at different magnifications respectively;

FIG.3 is the Raman spectrum of the carbon black prepared in Example 1 of the present disclosure;

FIG.4 is the Raman spectrum of the carbon black prepared in Example 2 of the present disclosure;

FIG.5 is the Raman spectrum of the carbon black prepared in Example 3 of the present disclosure;

FIG.6 is the Raman spectrum of the raw carbon black used in the examples of the present disclosure;

FIG.7 is the Raman spectrum of the carbon black in Comparative Example 1;

FIG.8 is the Raman spectrum of the carbon black in Comparative Example 2;

FIG.9 is the aggregate size distribution curve of the carbon black prepared in Example 1 of the present disclosure;

FIG.10 is the aggregate size distribution curve of the carbon black prepared in Example 2 of the present disclosure;

FIG.11 is the aggregate size distribution curve of the carbon black prepared in Example 3 of the present disclosure;

FIG.12 is the aggregate size distribution curve of the raw carbon black used in the examples of the present disclosure;

FIG.13 is the aggregate size distribution curve of the carbon black in Comparative Example 1;

FIG.14 is the aggregate size distribution curve of the carbon black in Comparative Example 2;

FIG.15 is the XRD patterns of the carbon black in Examples 1-3 and Comparative Examples 1-2 of the present disclosure and the raw carbon black.

## Detailed Description of Embodiments

The following will clearly and completely describe the technical solutions of the present disclosure in conjunction with the accompanying drawings and specific embodiments. However, those skilled in the art will understand that the embodiments described below are some, rather than all, of the embodiments of the present disclosure. They are only used to illustrate the present disclosure and should not be regarded as limiting the scope of the present disclosure. All other embodiments obtained by those of ordinary skill in the art without creative efforts based on the embodiments of the present disclosure shall fall within the protection scope of the present disclosure. For those examples where specific conditions are not specified, the experiments are carried out according to the conventional conditions or the conditions recommended by the manufacturer. For the reagents or instruments used without indicating the manufacturer, they are all conventional products that may be purchased commercially.

When used as a conductive agent in secondary batteries, carbon black is required to construct a robust conductive network, exhibit good intrinsic electrical conductivity, and possess certain liquid absorption and retention capacity. When used as a catalyst carrier in fuel cells, it must have a high specific surface area and structural stability. These multi-faceted performance requirements necessitate that multiple parameters of carbon black must simultaneously meet specific range requirements. However, carbon blacks in the prior art cannot simultaneously satisfy these multiple performance requirements.

Based on this, on the one hand, the present disclosure provides an ultra-high structure and high specific surface area carbon black based on high crystallinity. The carbon black satisfies the following characteristics:

(1) the degree of crystallinity is equal to or more than 39%;

(2) the BET specific surface area ranges from 200 $m^2$/g to 763 $m^2$/g;

(3) the OAN ranges from 334 mL/100g to 548 mL/100g; and

(4) the average particle diameter of primary particles is equal to or less than 35 nm.

The carbon black of the present disclosure has high crystallinity, ultra-high structure and high specific surface area. When used as a conductive agent or a carrier, due to the high graphitization degree of the carbon black, it can improve the electrical conductivity and compatibility of the electrode active material with the electrolyte, or enhance the stability of the carrier material to ensure the activity of the catalyst. Meanwhile, the carbon black of the present disclosure has excellent liquid absorption and retention capacity and catalyst loading stability.

The graphitization degree of carbon black may be characterized by its degree of crystallinity, which is obtained by measuring the ratio of the area of the G-band to the sum of the areas of the G-band and the D-band ($S_G/S_{G+D}$) in Raman spectroscopy. The carbon black of the present disclosure has a degree of crystallinity equal to or more than 39%, such as 39% to 46%, which is significantly higher than that of conventional carbon blacks, indicating that the carbon black of the present disclosure can achieve a high graphitization degree. When the carbon black of the present disclosure is used as a conductive agent or a carrier, due to the high graphitization degree of the carbon black, it can improve the electrical conductivity and compatibility of the electrode active material with the electrolyte, or enhance the stability of the carrier material to ensure the activity of the catalyst. In the carbon black of the present disclosure, the degree of crystallinity may be 39%, 40%, 42%, 43%, 44%, 45%, 46%, or a range composed of any two of them.

Herein, the testing method and parameters for the Raman spectroscopy of the present disclosure are as follows: Using a laser Raman spectroscopy device, place several particles of the test object on a glass slide and scrape them multiple times with a spatula to form a flat surface, then conduct the test under the following conditions: YAG laser (excitation wavelength): 514 nm, groove density: 600 gr/mm, filter: D0.6, objective magnification: 100×, exposure time: 150 seconds, accumulation times: 2 times.

The BET specific surface area is tested in accordance with the method specified in GB/T 19587-2004. Generally, the BET specific surface area of carbon black reflects the development degree of its porous structure. The carbon black of the present disclosure has a BET specific surface area of 200 $m^2$/g to 763 $m^2$/g, indicating that it possesses a highly developed porous structure and branched structure. This feature increases the number of contact points with other substances, fully enabling the electrical conductivity of the carbon black; meanwhile, it is conducive to accommodating and loading catalysts. In the carbon black of the present disclosure, the BET specific surface area may be 200 $m^2$/g, 213 $m^2$/g, 250 $m^2$/g, 300 $m^2$/g, 350 $m^2$/g, 400 $m^2$/g, 450 $m^2$/g, 500 $m^2$/g, 550 $m^2$/g, 572 $m^2$/g, 600 $m^2$/g, 650 $m^2$/g, 691 $m^2$/g, 700 $m^2$/g, 728 $m^2$/g, 763 $m^2$/g, or a range composed of any two of them.

Under high-temperature and oxygen-deficient or oxygen-free conditions, the carbon black raw material first undergoes cracking to form small-molecule gases or ions. These ions or molecules then deposit and nucleate, giving rise to the primary particles of carbon black. At high temperatures, the primary particles arrange in a complex manner to form chemically bonded branched or chain-like aggregates, which constitute the primary structure of carbon black. The primary structure is a structure formed by strong chemical bonding forces between aggregates and is permanent structure. Subsequently, these aggregates re-aggregate into larger agglomerates through electrostatic forces, forming the secondary structure of carbon black. The secondary structure is a weak or unstable structure formed by van der Waals forces between carbon black aggregates and is not a permanent structure. The void volume generated by these aggregated carbon black agglomerates serves as a measure of the carbon black's architecture and may be characterized by the oil absorption number (OAN), which is determined using the standard method specified in GB/T 3780.2-2017 Carbon Black-Part 2: Determination of Oil Absorption Number. In the carbon black of the present disclosure, the OAN may be 334 mL/100 g, 360 mL/100 g, 380 mL/100 g, 400 mL/100 g, 405 mL/100 g, 420 mL/100 g, 446 mL/100 g, 450 mL/100 g, 460 mL/100 g, 480 mL/100 g, 500 mL/100 g, 548 mL/100 g, or a range composed of any two of them.

The average particle diameter of the primary particles of the carbon black of the present disclosure is relatively small, equal to or less than 35 nm, such as 25-35 nm. With the same mass of carbon black, the number of primary particles increases, which can further increase the contact points and is beneficial for forming more conductive paths. In the carbon black of the present disclosure, the average particle diameter of the primary particles may be 25 nm, 28 nm, 30 nm, 32 nm, 35 nm, or a range composed of any two of them. The average particle diameter of the primary particles is a value obtained by averaging the particle diameters measured from the photos taken by a transmission electron microscope, and the particle diameter is the equivalent circular diameter calculated from the area of the primary particles.

In a specific embodiment of the present disclosure, the microcrystalline size Lc of the carbon black ranges from 20.03 Å to 25.17 Å.

The microcrystalline size Lc is a factor indicating the crystallinity of carbon materials with a crystal structure. It may be calculated based on the X-ray diffraction data obtained from X-ray diffraction (XRD) analysis using the following Scherrer equation.

$$\text{Scherrer equation: } Lc = 0.89\lambda / (\beta \, Cos\theta)$$

where 0.89 is the Scherrer constant, $\lambda$ is the wavelength, $\theta$ is the angle at the d-spacing (002) peak, and $\beta$ is the full-width at half maximum at the d-spacing (002) peak.

Compared with the microcrystalline size Lc of the raw carbon black, the microcrystalline size Lc of the carbon black of the present disclosure is significantly increased, which greatly improves the crystallinity of the carbon black and indicates that the graphitization degree of the carbon black of the present disclosure is substantially enhanced. In the carbon black of the present disclosure, the microcrystalline size Lc may be 20.03 Å, 20.5 Å, 21 Å, 21.5 Å, 22.14 Å, 23 Å, 23.5 Å, 24 Å, 24.5 Å, 25.17 Å, or a range composed of any two of them.

In a specific embodiment of the present disclosure, the microcrystalline size La of the carbon black ranges from 27.8 Å to 37.5 Å.

The Raman spectrum of carbon includes two main "resonance" bands at approximately 1340 cm$^{-1}$ and 1580 cm$^{-1}$, denoted as the "D" and "G" bands respectively. It is generally believed that the D band is attributed to disordered sp$^2$ carbon, while the G band is attributed to graphitic or "ordered" sp$^2$ carbon. Regression analysis yields the following empirical relationship: La = 43.5 × (area of the G band / area of the D band), where La is calculated in angstroms. The crystal domains of the ultra-high structure and high specific surface area carbon black based on high crystallinity of the present disclosure may be characterized by the microcrystalline size (La), and the La microcrystalline size is measured by Raman spectroscopy. La is defined as 43.5 × (area of the G band / area of the D band). The microcrystalline size can give an indication of the graphitization degree, where a higher La value is associated with a higher graphitization degree. The microcrystalline size La of the carbon black of the present disclosure ranges from 27.8 Å to 37.5 Å, which can indicate that the carbon black of the present disclosure has a higher graphitization degree. In the carbon black of the present disclosure, the microcrystalline size La may be 27.8 Å, 28 Å, 29 Å, 30 Å, 31.1 Å, 32 Å, 34 Å, 35 Å, 36 Å, 37.5 Å or a range composed of any two of them.

In a specific embodiment of the present disclosure, the lattice fringes of the primary particles of the carbon black exhibit an irregular conical hat-shaped morphology or ring-shaped morphology.

In a specific embodiment of the present disclosure, the aggregate size D50 of the carbon black is equal to or less than 95 nm. Further, the aggregate size D50 of the carbon black is equal to or more than 68 nm.

The aggregate size distribution curve of the carbon black of the present disclosure is measured by a disc centrifugal sedimentation particle diameter analyzer (Brookhaven Instruments Corporation, BI-DCP), and the test method refers to GB/T 3780.27-2020. The specific test method may be referred to as follows:

(1) Preparation of the carbon black dispersion: 20 mg of the carbon black sample is weighed and 20 mL of the dispersion (rotation liquid : ethanol = 4 : 1 (volume ratio)) is added. The pH value is adjusted to the range of 9 to 10. Ultrasonic treatment is carried out at 50 W for 5 minutes, followed by ultrasonic treatment with a cell pulverizer for 10 minutes. Then, ultrasonic treatment at 50 W is conducted again for 5 minutes. The carbon black dispersion is left to cool down to room temperature for subsequent use. Here, 1000 mL of the rotation solution is prepared by dissolving 0.5 g of Triton X-100 and 5 drops of ammonia water in softened water.

(2) The main power supply of the particle diameter analyzer is turned on, and the device is left on standby for 30 minutes to enable it to enter a stable state.

(3) The computer of the particle diameter analyzer is turned on, and the relevant parameters are set as follows: measurement time 60 min; rotation speed 7000 r/min; particle density 1.860 g/ cm$^3$; temperature 25 °C.

(4) 1 mL of ethanol is injected with a syringe, and the "motor" button is pressed simultaneously. Immediately, 15 mL of the rotation solution and 0.1 mL of dodecane are injected successively. After waiting for 3 minutes to 5 minutes, when the signal value stabilizes, 0.25 mL of the carbon black dispersion is added, and the measurement program of the instrument is started. The test is stopped when the signal value approaches the baseline, which takes about 30 minutes to 60 minutes. The "zoom" button is clicked to adjust the baseline to make the baseline area parallel. Each measured sample is measured twice repeatedly.

D50 refers to the particle diameter corresponding to the cumulative particle diameter distribution percentage reaching 50% for carbon black aggregates. The aggregate size distribution of the carbon black prepared in the present disclosure is similar to the aggregate size distribution curve of the raw carbon black. According to the D50 values, it can be seen that the carbon black after oxidation etching in the present disclosure maintains the structural size of the aggregates of the raw carbon black without damaging the rich branched structure of the carbon black, thereby endowing it with excellent liquid absorption and retention capacity. The aggregate size D50 of the carbon black of the present disclosure is 68 nm to 95 nm, such as 68 nm, 72 nm, 75 nm, 78 nm, 80 nm, 82 nm, 84 nm, 88 nm, 90 nm, 95 nm, or a range composed of any two of them.

In a specific embodiment of the present disclosure, the average lattice spacing d(002) of the carbon black is equal to or less than 0.3534 nm, for example, it ranges from 0.3479 nm to 0.3534 nm.

The graphitization degree of the carbon material can also be characterized by its "d-spacing". The average lattice spacing d(002) of the present disclosure is defined as the average distance between adjacent hexagonal rings in the c-axis direction, which is determined by the XRD(002) diffraction peak. The d(002) spacing may be calculated according to Bragg's law using the following formula:

$$d = \lambda/(2Sin\theta)$$

Where: $\lambda$ = the wavelength of the radiation source (for copper, $\lambda$ is 1.54 Å), $\theta$ = the diffraction angle (in degrees) (peak 002), d = the spacing between two carbon layer planes.

The average lattice spacing d(002) of the conductive carbon black of the present disclosure is equal to or less than 0.3534 nm, such as 0.3479 nm to 0.3534 nm, which is significantly reduced compared to the d(002) spacing of the raw carbon black. This indicates that the etching process of the present disclosure decreases the lattice spacing and improves the crystallinity of the carbon black. Furthermore, the d(002) value of the carbon black of the present disclosure being close to or less than 0.3500 nm further demonstrates that the carbon black is graphitic carbon, enhancing its stability. In different embodiments, the average lattice spacing d(002) of the carbon black of the present disclosure may be 0.3479 nm, 0.349 nm, 0.35 nm, 0.351 nm, 0.3515 nm, 0.352 nm, 0.3525 nm, 0.353 nm, 0.3534 nm, or a range composed of any two of them.

In a specific embodiment of the present disclosure, the average pore size of the carbon black ranges from 5.86 nm to 9.04 nm. For example, in different embodiments, the average pore size of the carbon black may be 5.86 nm, 6 nm, 6.2 nm, 6.4 nm, 6.59 nm, 6.8 nm, 7 nm, 7.2 nm, 7.41 nm, 8.5 nm, 9.04 nm or a range composed of any two of them.

In a specific embodiment of the present disclosure, the volume of pores with a size of 2 nm to 50 nm in the carbon black measured by nitrogen desorption ranges from 0.3157 cm$^3$/g to 1.2061 cm$^3$/g. For example, in different embodiments, the volume of pores with a size of 2 nm to 50 nm may be 0.3157 cm$^3$/g, 0.4 cm$^3$/g, 0.5 cm$^3$/g, 0.6540 cm$^3$/g, 0.7 cm$^3$/g, 0.8 cm$^3$/g, 0.85 cm$^3$/g, 0.8689 cm$^3$/g, 1.2061 cm$^3$/g or a range composed of any two of them.

In a specific embodiment of the present disclosure, the proportion of the volume of pores with a size of 2 nm to 50 nm in the total pore volume of the carbon black is more than 84.6%, for example, it ranges from 84.6% to 93.8%. For example, in different embodiments, the proportion of the volume of pores with a size of 2 nm to 50 nm in the total pore volume may be 84.6%, 85%, 86.9%, 87%, 88%, 88.9%, 93.8% or a range composed of any two of them.

In the present disclosure, the pore parameters are tested according to the method of GB/T 19587-2004. The pore volume of the carbon black of the present disclosure can reach up to 0.9773 cm$^3$/g, and the proportion of the mesopore (2 nm to 50 nm) volume is more than 84.6%. Compared with the raw carbon black, the proportion of the mesopore volume is significantly increased, which improves the liquid-holding capacity of the carbon black and is beneficial to the loading of the catalyst. The well-developed mesoporous structure and the relatively large BET specific surface area indicate that the carbon black of the present disclosure has a well-developed void structure.

On the other hand, the present disclosure provides a preparation method of any one of the above-mentioned carbon blacks, comprising the following steps:

subjecting a raw carbon black which has undergone pretreatment to activation and etching treatment, wherein

the activation and etching treatment comprising: heating to a first activation temperature under a protective atmosphere and performing activation treatment under the action of an activation gas; then cooling to a second activation temperature and performing etching treatment under the action of the activation gas; then cooling to room temperature under the protective atmosphere;

the pretreatment comprises: treating the raw carbon black in an aqueous solution containing an oxidant at 30°C to 150°C for 0.5 h to 2 h, then washing and drying;

wherein the first activation temperature ranges from 1100°C to 1500°C, the second activation temperature ranges from 900°C to 1000°C, and the degree of crystallinity of the raw carbon black is equal to or more than 44%.

The present disclosure employs raw carbon black with a certain degree of graphitization, wherein the primary particle surface of the raw carbon black exhibits a high graphitization degree. The raw carbon black of the present disclosure has a degree of crystallinity equal to or more than 44%, such as 44%, 45%, 46%, 48%, 50%, 51%, or a range composed of any two of them. The raw carbon black comprises a "shell" of relatively large and perfect microcrystals, where the microcrystals have layered planes typically oriented parallel to the particle surface to minimize defects on the surface of the primary particles of the raw carbon black; the central region or "core" of the "shell" mainly contains small and imperfect microcrystals, single-layer planes, and possibly random carbon not bonded into the layered planes (i.e., "defects"). In the preparation method of the present disclosure, the raw carbon black is first pretreated with an oxidizing agent to achieve preliminary oxidation. Subsequently, at a higher temperature (1100°C to 1500°C), activation gas molecules (such as water molecules) and oxygen-containing functional groups generated by preliminary oxidation first attack the "defects" on the carbon surface, removing carbon atoms from the surface to form gaseous CO or $CO_2$ and hydrogen. This process exposes more carbon atoms or amorphous carbon and creates more "defects," i.e., activation. Then, at a suitable temperature (900°C to 1000°C), the carbon in the "core" is further etched preferentially to form carbon black with a high specific surface area and high structural complexity. Meanwhile, since the "shell" has a high graphitization degree, it will not dissociate or collapse due to the etching of partial defects during the oxidation-etching process. This ensures the maintenance of a grape-cluster-like porous branched structure, preserves the aggregate structure of the raw carbon black, and thus endows the carbon black with excellent liquid absorption/retention capacity and outstanding electrical conductivity.

Appropriate pretreatment temperature and duration can form suitable defects and generate appropriate oxygen-containing functional groups on the carbon surface during the preliminary oxidation process. In different embodiments, during the pretreatment, the temperature for treating the raw carbon black in the aqueous solution containing an oxidizing agent may be 30°C, 50°C, 80°C, 100°C, 120°C, 150°C, or a range composed of any two of them; the treatment duration may be 0.5 h, 0.8 h, 1 h, 1.5 h, 2 h, or a range composed of any two of them.

At the relatively high first activation temperature of the present disclosure, the activation gas molecules and the oxygen-containing functional groups generated by the preliminary oxidation can attack the defects on the carbon surface and form a new gas phase, thereby forming more defects. In the preparation method of the present disclosure, the first activation temperature may be 1100 °C, 1200 °C, 1300 °C, 1400 °C, 1500 °C or a range composed of any two of them.

The second activation temperature of the present disclosure is relatively low. At this temperature, preferential etching of the "core" of the carbon black may be achieved, thereby forming carbon black with a high specific surface area and high structural complexity. Meanwhile, this temperature avoids excessive etching and prevents the original structure from being overly damaged. In the preparation method of the present disclosure, the second activation temperature may be 900°C, 920°C, 940°C, 950°C, 960°C, 980°C, 1000°C, or a range composed of any two of them.

The protective atmosphere of the present disclosure may include at least one of nitrogen and argon. By cooling under the protective atmosphere, oxidation of the surface of the product by oxygen is prevented to avoid a reduction in crystallinity, and functional groups on the surface of the product may be removed.

In a specific embodiment of the present disclosure, the BET specific surface area of the raw carbon black ranges from 60 $m^2$/g to 150 $m^2$/g.

In the preparation method of the present disclosure, there is no limitation on the BET specific surface area of the raw carbon black. For example, raw carbon black with a BET specific surface area of 60 $m^2$/g, 70 $m^2$/g, 80 $m^2$/g, 90 $m^2$/g, 100 $m^2$/g, 110 $m^2$/g, 120 $m^2$/g, 130 $m^2$/g, 140 $m^2$/g, 150 $m^2$/g, etc. may be used, but it is not limited thereto.

In a specific embodiment of the present disclosure, the raw carbon black is acetylene carbon black.

In a specific embodiment of the present disclosure, the activation gas comprises at least one of nitrogen dioxide, nitric oxide, $CO_2$, CO, oxygen, ozone and water vapor.

Using the above activation gas helps to attack the defects on the carbon surface during the activation process, and then expose more carbon atoms or amorphous carbon. In actual operation, the activation gas used for the activation treatment at the first activation temperature and the heat preservation treatment at the second activation temperature may be the same or different.

In a specific embodiment of the present disclosure, the duration of the activation treatment at the first activation temperature ranges from 10 min to 30 min.

By regulating the duration of the activation treatment, the defect formation on the carbon surface of raw carbon black at the first activation temperature may be precisely controlled. An appropriate activation treatment duration helps ensure structural stability while promoting defect formation. The activation treatment duration of the present disclosure may be 10 min, 15 min, 20 min, 25 min, 30 min, or a range composed of any two of them.

In specific embodiments of the present disclosure, the etching treatment duration at the second activation temperature ranges from 30 min to 70 min.

At the second activation temperature, heat preservation etching for a certain duration ensures preferential etching within the "core" of the carbon black to increase mesoporous structures; meanwhile, it avoids excessive etching duration, which could lead to collapse or dissociation of the primary carbon black particles. The etching duration of the present disclosure at the second activation temperature may be 30 min, 40 min, 50 min, 60 min, 70 min, or a range composed of any two of them.

In a specific embodiment of the present disclosure, during the cooling process, the cooling rate ranges from 2 °C/min to 4 °C/min, for example, it may be 2 °C/min, 2.5 °C/min, 3 °C/min, 3.5 °C/min, 4 °C/min, etc.

In a specific embodiment of the present disclosure, during the heating process, the heating rate ranges from 4 °C/min to 6 °C/min, for example, it may be 4 °C/min, 4.5 °C/min, 5 °C/min, 5.5 °C/min, 6 °C/min, etc.

In a specific embodiment of the present disclosure, the oxidant comprises at least one of hydrogen peroxide and an oxygen-containing acid. Further, the oxygen-containing acid comprises at least one of nitric acid, sulfuric acid, hypochlorous acid and perchloric acid.

In actual operation, the mass fraction of the oxidant in the aqueous solution containing the oxidant may be 20%-70%, for example, it may be 20%, 35%, 50%, 60%, 70%, etc., but it is not limited thereto. The amount of the aqueous solution containing the oxidant is not limited, as long as the raw carbon black may be immersed in it.

On yet another aspect, the present disclosure provides an electrode slurry, comprising any one of the above-mentioned carbon blacks.

On yet another aspect, the present disclosure provides a secondary battery, comprising a positive electrode, a negative electrode, an electrolyte and a separator, wherein at least one of the positive electrode and the negative electrode is prepared from any one of the above-mentioned electrode slurries.

Herein, the types of the positive electrode active material, the negative electrode active material, the electrolyte, and the separator may be adjusted according to actual needs and are not limited to a certain type. In the following examples, only one type of active material, electrolyte, and separator are used for illustrative purposes, rather than limiting these types.

On yet another aspect, the present disclosure provides a fuel cell comprising a catalyst, wherein the catalyst comprises a carrier and active catalyst particles supported on the carrier, the carrier comprises carbon blacks.

The carbon black of the present disclosure is used as a catalyst support in fuel cells. With its ultra-high structure and high specific surface area, it maximizes the contact between reactants and the catalyst, thereby improving catalytic efficiency. Meanwhile, the carbon black exhibits excellent structural stability, which enhances the durability of the catalyst support and prolongs the service life of the fuel cell. The types of active catalyst particles in the fuel cell may be adjusted according to actual needs and are not limited to a single type.

The raw carbon black used in the following examples is acetylene carbon black, with a BET specific surface area of 143 $m^2$/g and a crystallinity of 44%, but is not limited to this.

**Example 1**

This example provides a preparation method for an ultra-high structure and high specific surface area carbon black based on high crystallinity, which includes the following steps:

(1) The raw carbon black was added to an aqueous hydrogen peroxide solution with a mass fraction of 20 wt%. The mixture was treated at 30°C for 0.5 h, then washed with water and dried to obtain the pretreated raw carbon black.

(2) The pretreated raw carbon black sample from step (1) was placed into a rotary furnace, and nitrogen was introduced for protection. The furnace temperature was raised to 1100°C at a heating rate of 5°C/min. Then the nitrogen supply was cut off and water vapor was introduced. After that, the temperature was maintained for 10 min. The nitrogen dioxide supply was cut off, and water vapor was introduced. Then the furnace temperature was lowered to 900°C at a cooling rate of 3°C/min, and the temperature was maintained for 30 min.

(3) The water vapor supply was cut off, and nitrogen was introduced. The mixture was allowed to cool naturally to room temperature under nitrogen protection to obtain the ultra-high structure and high specific surface area carbon black based on high crystallinity.

**Example 2**

This example provides a preparation method for an ultra-high structure and high specific surface area carbon black based on high crystallinity, which includes the following steps:

(1) The raw carbon black was added to an aqueous nitric acid solution with a mass fraction of 35 wt%. The mixture was treated at 60°C for 1 h, then washed with water and dried to obtain the pretreated raw carbon black.

(2) The pretreated raw carbon black sample from step (1) was placed into a rotary furnace, and nitrogen was introduced for protection. The furnace temperature was raised to 1100°C at a heating rate of 5°C/min. Then the nitrogen supply was cut off and water vapor was introduced. After that, the temperature was maintained for 20 min. Then the furnace temperature was lowered to 950°C at a cooling rate of 3°C/min, and the temperature was maintained for 50 min.

(3) The water vapor supply was cut off and nitrogen was introduced. The mixture was allowed to cool naturally to room temperature under nitrogen protection to obtain the ultra-high structure and high specific surface area carbon black based on high crystallinity.

**Example 3**

This example provides a preparation method for an ultra-high structure and high specific surface area carbon black based on high crystallinity, which includes the following steps:

(1) The raw carbon black was added to an aqueous nitric acid solution with a mass fraction of 70 wt%. The mixture was treated at 150°C for 2 h, then washed with water and dried to obtain the pretreated raw carbon black.

(2) The pretreated raw carbon black sample from step (1) was placed into a rotary furnace, and nitrogen was introduced for protection. The furnace temperature was raised to 1400°C at a heating rate of 5°C/min. Then the nitrogen supply was cut off and water vapor was introduced. After that, the temperature was maintained for 30 min. Then the furnace temperature was lowered to 1000°C at a cooling rate of 3°C/min, and the temperature was maintained for 70 min.

(3) The water vapor supply was cut off and nitrogen was introduced. The mixture was allowed to cool naturally to room temperature under nitrogen protection to obtain the ultra-high structure and high specific surface area carbon black based on high crystallinity.

**Example 4**

This example provides a preparation method for a battery, which includes the following steps:

(1) The cathode active material lithium iron phosphate, polyvinylidene fluoride and carbon black were weighed at a mass ratio of 96:2:2 and mixed uniformly in an appropriate amount of N-methylpyrrolidone to obtain an electrode slurry.

(2) The electrode slurry obtained in step (1) was coated onto a 16-$\mu$m-thick aluminum foil (current collector), and then dried, rolled and cut into pieces to fabricate a cathode plate.

(3) A button cell was prepared using a metallic lithium sheet as the counter electrode, a separator (model: Celgard 2500) and an electrolyte (1 mol/L lithium hexafluorophosphate dissolved in dimethyl carbonate (DMC)/ethylene carbonate (EC)/ethyl methyl carbonate (EMC) at a volume ratio of 1:1:1).

The carbon black used in the electrode slurry of each battery was respectively the carbon black obtained in Examples 1-3, and the corresponding batteries are numbered as Example 4-1, Example 4-2 and Example 4-3.

**Comparative Example 1**

Comparative Example 1 provides a preparation method for a carbon black product, which includes the following steps:

(1) The raw carbon black was added to an aqueous nitric acid solution with a mass fraction of 35 wt%. The mixture was treated at 150°C for 2 h, then washed with water and dried to obtain the pretreated raw carbon black.

(2) The pretreated raw carbon black sample from step (1) was placed into a rotary furnace, and nitrogen was introduced for protection. The furnace temperature was raised to 1500°C at a heating rate of 5°C/min. Then the nitrogen supply was cut off and water vapor was introduced. After that, the temperature was maintained for 30 min. Then the furnace temperature was lowered to 1050°C at a cooling rate of 3°C/min, and the temperature was maintained for 70 min.

(3) The water vapor supply was cut off and nitrogen was introduced. The mixture was allowed to cool naturally to room temperature under nitrogen protection to obtain the carbon black product.

Comparative Example 1 also provides a battery. Referring to the preparation method in Example 4, the only difference is that the carbon black therein is replaced with an equal-weight amount of the carbon black from Comparative Example 1. The obtained battery is numbered as Comparative Example 1-1.

**Comparative Example 2**

Comparative Example 2 provides a commercially available carbon black.
Comparative Example 2 also provides a battery. Referring to the preparation method in Example 4, the only difference is that the carbon black therein is replaced with an equal-weight amount of the carbon black from Comparative Example 2. The obtained battery is numbered as Comparative Example 2-1.

**Experimental Example 1**

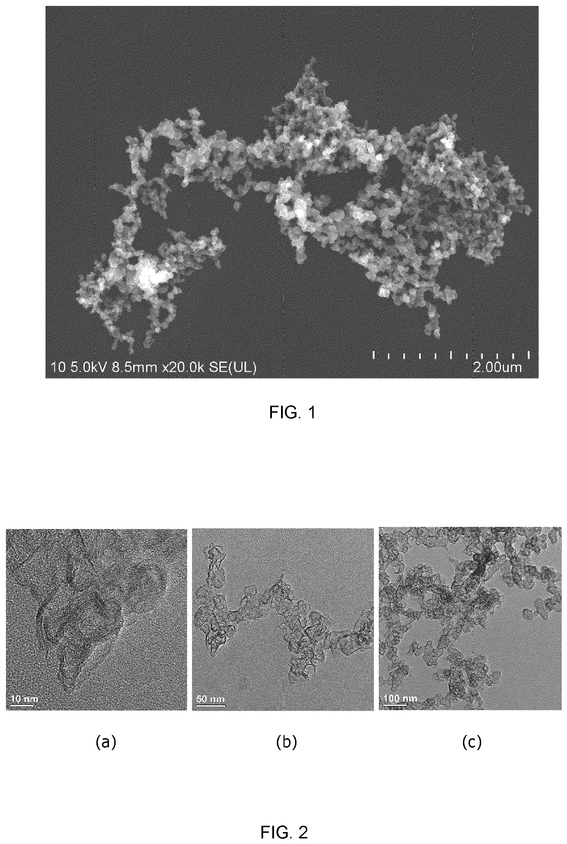

FIG. 1 is a scanning electron microscope image of the carbon black prepared in Example 3 of the present disclosure, and FIG. 2 is a transmission electron microscope image of the carbon black prepared in Example 3 of the present disclosure at different magnifications. As can be seen from the figures, the ultra-high structure and high specific surface area carbon black based on high crystallinity prepared in the examples of the present disclosure maintains a similar microstructure to the raw carbon black, having a grape-cluster-like porous branched structure. This indicates that the oxidative etching process of the present disclosure does not damage the carbon black aggregate structure, enabling the carbon black to have good liquid absorption and retention capabilities. Meanwhile, the oxidative etching of the carbon black increases the mesoporous structure, and some primary carbon black particles are etched and hollowed out, thereby improving the carbon black's liquid absorption and retention capabilities and increasing ion conduction paths. In addition, it can be seen from the transmission electron microscope image that the carbon black prepared in the present disclosure has ribbon-like or ring-like lattice fringes, further confirming that the prepared carbon black has a higher degree of graphitization.
In addition, it can be seen from the transmission electron microscope that the primary particles of the carbon black prepared by the present disclosure are roughly spherical, and the primary particles of the carbon black are not collapsed or dissociated due to oxidation etching. The average particle diameter of the primary particles of the carbon black of the present disclosure is 25-35 nm. Specifically, the average particle diameters of the primary particles of the carbon black in Examples 1 to 3 are shown in Table 1.

Table 1 Average Particle Diameters of Primary Particles of Carbon Black in Different Examples

| Product/Parameter | Average Particle Diameter of Primary Particles (nm) |
| --- | --- |
| Example 1 | 35 |
| Example 2 | 30 |
| Example 3 | 25 |

**Experimental Example 2**

Raman spectroscopy testing was performed on the carbon black prepared in different examples and comparative examples. The specific testing method was as follows: using a laser Raman spectroscopy device, several particles of the carbon black sample to be tested were placed on a glass slide and scraped multiple times with a spatula to form a flat surface. Testing was conducted under the following conditions: YAG laser (excitation wavelength): 514 nm, groove density: 600 gr/mm, filter: D0.6, objective magnification: 100×, exposure time: 150 seconds, accumulation times: 2 times.

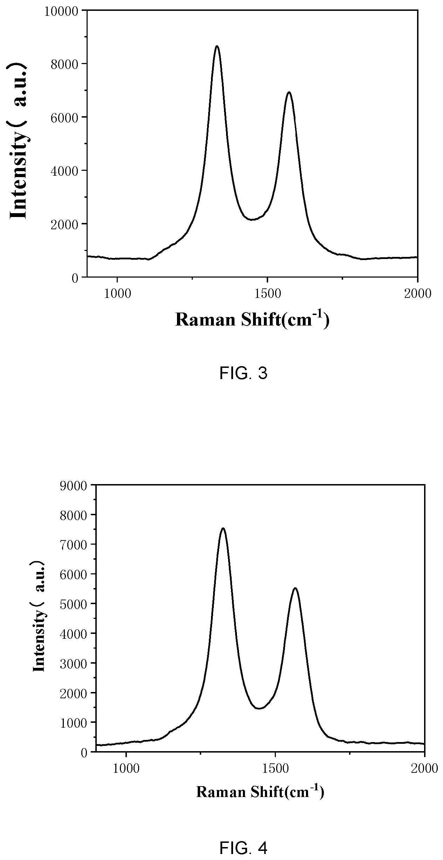

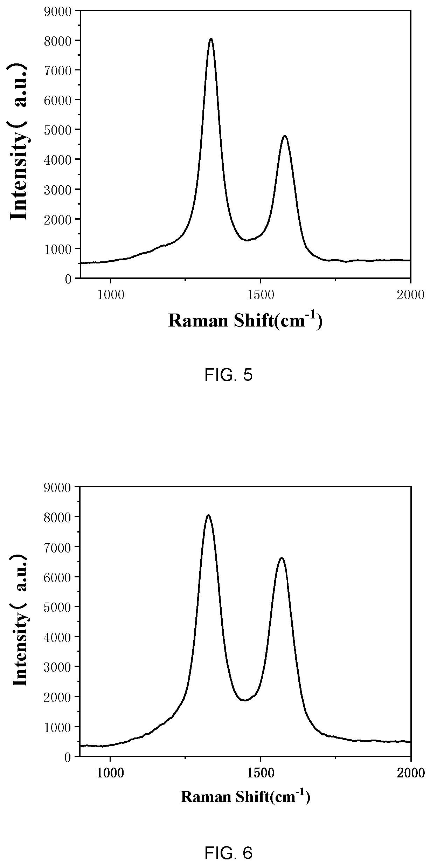

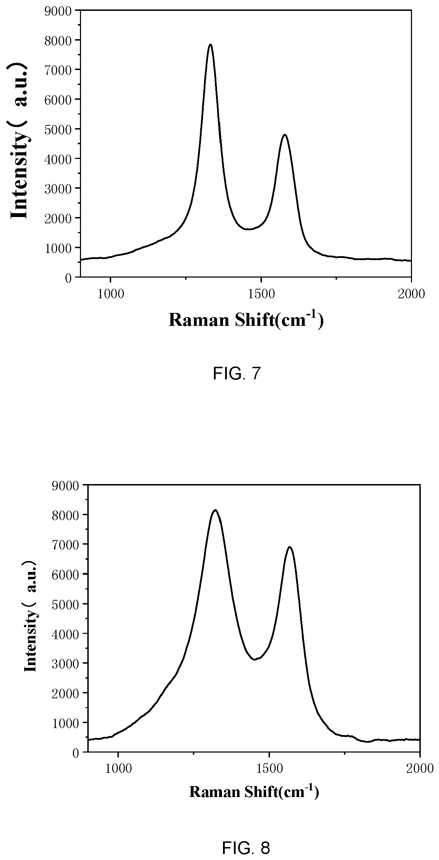

FIG. 3 to FIG. 5 are the Raman spectra of the carbon black prepared in Examples 1 to 3 of the present disclosure respectively, FIG. 6 is the Raman spectrum of the raw carbon black used in the examples of the present disclosure, and FIG. 7 to FIG. 8 are the Raman spectra of the carbon black in Comparative Examples 1 to 2 respectively. It can be seen from the figures that the Raman spectrum of the carbon black prepared by the present disclosure has two characteristic peaks, namely the D Raman scattering peak and the G Raman scattering peak. The microcrystalline size La and the degree of crystallinity of the carbon black calculated according to the Raman spectrum are shown in Table 2 respectively.

Table 2 La and degree of crystallinity of Carbon Black in Different Examples and Comparative Examples

| No. | Microcrystalline size La (Å) | Degree of crystallinity (%) |
|---|---|---|
| Example 1 | 37.5 | 46 |
| Example 2 | 31.1 | 42 |
| Example 3 | 27.8 | 39 |
| Comparative Example 1 | 26.8 | 32 |
| Comparative Example 2 | 22.4 | 34 |
| Raw Carbon Black | 36.2 | 44 |

The microcrystalline size La provides an indication of graphitization, where a higher La value is associated with a higher degree of graphitization. The above results show that the carbon black prepared in the present disclosure has a higher degree of graphitization. The microcrystalline size La of the carbon black in Comparative Example 1 is 26.8 Å, which is much lower than that of the raw carbon black. This is due to the dissociation caused by severe etching of the microcrystals in the raw carbon black of Comparative Example 1, indicating that excessive etching, while increasing the specific surface area of the carbon black, causes a rapid decrease in crystallinity and affects its performance. The carbon black prepared in the present disclosure achieves a higher degree of graphitization, which is superior to the commercially available carbon black in Comparative Example 2. When the carbon black prepared in the present disclosure is used as a conductive agent or carrier, its high graphitization degree can improve the electrical conductivity of the electrode active material and its compatibility with the electrolyte, or enhance the stability of the carrier material to ensure catalyst activity.

The BET specific surface area and pore parameters of the carbon black in different examples and comparative examples were further tested according to GB/T 19587-2004. Specifically, the nitrogen adsorption-desorption method was used to determine the specific surface area and pore size distribution of the carbon black. The sample was degassed under vacuum at 250°C for 2 h, followed by measuring the adsorption-desorption performance of $N_2$ at liquid nitrogen temperature (77 K) within the $p/p_0$ range of 0 to 1. The specific surface area of the carbon black was determined by the multi-point BET method, the micropore area and volume were analyzed by the t-plot method, and the pore size distribution was calculated using the DFT method ($N_2$@77K in carbon slit pore QSDFT adsorption branch model). The specific results are shown in Table 3.

Table 3 BET specific surface area and pore parameters of carbon black in different examples and comparative examples

| No. | Avg. Pore Dia. (nm) | Total Pore Vol. ($cm^3/g$) | Mesopore Vol. (2 nm to 50 nm, $cm^3/g$) | Mesopore Vol. Prop. | BET ($m^2/g$) |
|---|---|---|---|---|---|
| Example 1 | 7.41 | 0.3731 | 0.3157 | 84.6% | 200 |
| Example 2 | 5.86 | 0.7527 | 0.6540 | 86.9% | 572 |
| Example 3 | 9.04 | 1.2859 | 1.2061 | 93.8% | 763 |

(continued)

| No. | Avg. Pore Dia. (nm) | Total Pore Vol. (cm³/g) | Mesopore Vol. (2 nm to 50 nm, cm³/g) | Mesopore Vol. Prop. | BET (m²/g) |
|---|---|---|---|---|---|
| Comparative Example 1 | 9.90 | 1.5820 | 1.5476 | 97.8% | 820 |
| Comparative Example 2 | 6.59 | 1.0652 | 0.8308 | 77.9% | 776 |
| Raw Carbon Black | 10.03 | 0.3031 | 0.2301 | 75.9% | 143 |

As can be seen from the data, the carbon black prepared in the present disclosure exhibits a pore volume as high as 1.2859 cm³/g, with the proportion of mesopore (2 nm to 50 nm) volume exceeding 84.6%. Compared to the raw carbon black and the carbon black in Comparative Example 2, the mesopore volume proportion is increased, which enhances the liquid retention capacity of the carbon black and facilitates catalyst loading.

According to the standard method specified in GB/T 3780.2-2017 Carbon Black-Part 2: Determination of Oil Absorption Number, the oil absorption number (OAN) of the carbon black in different examples and comparative examples was measured. The specific results are shown in Table 4.

Table 4 OAN of Carbon Black in Different Examples and Comparative Examples

| Number | OAN (mL/100g) |
|---|---|
| Example 1 | 334 |
| Example 2 | 446 |
| Example 3 | 548 |
| Comparative Example 1 | 400 |
| Comparative Example 2 | 369 |
| Raw Carbon Black | 338 |

Compared with the OAN of the raw carbon black, the OAN of the carbon black prepared in Examples 1 to 3 of the present disclosure shows an increase, with the highest increase rate reaching 50.9%. This endows the carbon black with sufficient structural length and liquid absorption/retention capacity when used as a conductive agent, enabling good electrical conductivity and ion conduction ability. Additionally, the carbon black prepared in Comparative Example 1 undergoes excessive etching, leading to unstable and fracture-prone aggregate structures, with some aggregates etched into smaller ones. As a result, its oil absorption number does not increase significantly with intensified etching.

Experimental Example 3

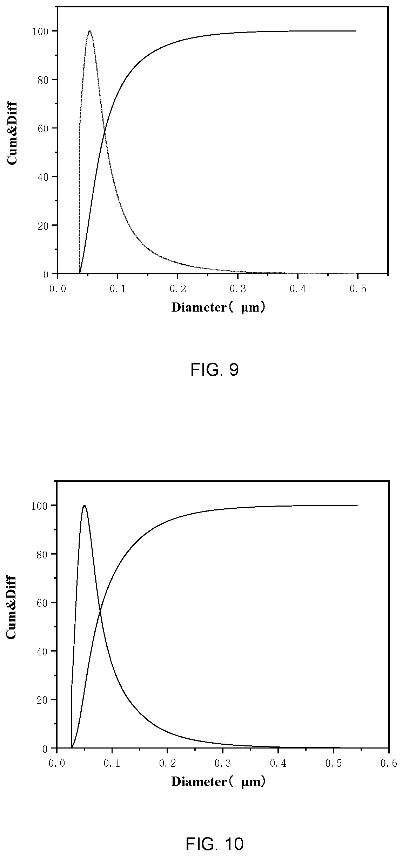

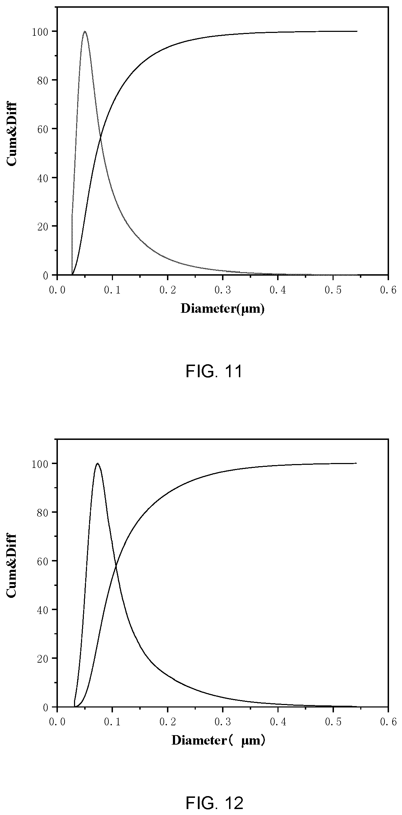

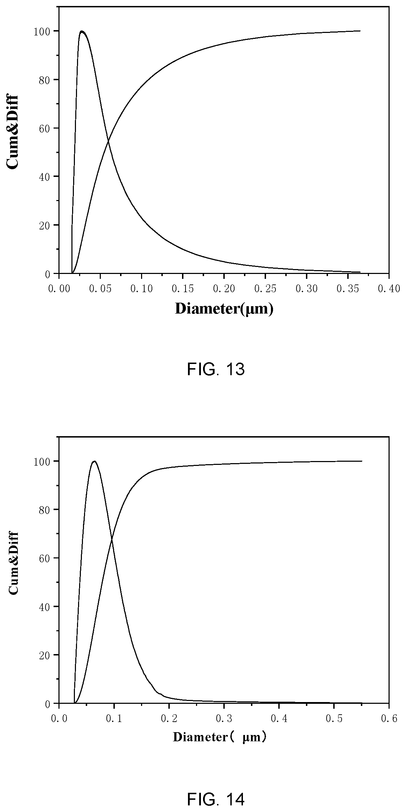

The aggregate size distribution curves of the carbon black were measured using a disc centrifugal sedimentation particle diameter analyzer (Brookhaven Instruments Corporation, BI-DCP). The aggregate size distribution curves of the carbon black prepared in Examples 1 to 3 are shown in FIG. 9 to FIG. 11, the curve of the raw carbon black used in the examples is shown in FIG. 12, and the curves of the carbon black in Comparative Examples 1 to 2 are shown in FIG. 13 to FIG. 14. The D50 value of the aggregate size of the carbon black was calculated based on the above results, as shown in Table 5.

Table 5 D50 value of the aggregate size of carbon black in different examples and comparative examples

| No. | D50 (nm) |
|---|---|
| Example 1 | 84 |
| Example 2 | 95 |
| Example 3 | 68 |

(continued)

| No. | D50 (nm) |
|---|---|
| Comparative Example 1 | 55 |
| Comparative Example 2 | 85 |
| Raw Carbon Black | 96 |

From the above test results, compared with the aggregate size distribution curve of the raw carbon black, the curves of the carbon black prepared in Examples 1 to 3 show little change and are similar to that of the commercially available carbon black in Comparative Example 2. The D50 values indicate that the carbon black after oxidation etching in the present disclosure maintains the structural size of the aggregates of the raw carbon black without substantially destroying its rich branched structures, which is consistent with the observations from scanning electron microscopy and transmission electron microscopy. In contrast, the carbon black prepared in Comparative Example 1 undergoes excessive etching, leading to unstable and fracture-prone aggregate structures or etching of aggregates into smaller ones. As a result, its aggregate particle diameter is significantly reduced compared to the raw carbon black and the carbon black prepared in Examples 1 to 3, which may affect the liquid absorption and retention capacity of the carbon black.

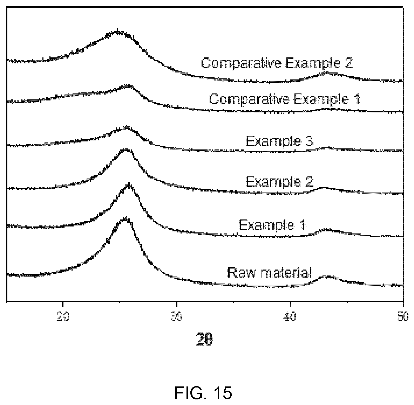

FIG. 15 shows the XRD patterns of the carbon black in Examples 1 to 3, Comparative Examples 1 to 2, and the raw carbon black of the present disclosure. Calculated from the XRD pattern data, the average lattice spacing d(002) of the carbon black in Examples 1 to 3 is 0.3534 nm, 0.3510 nm, and 0.3479 nm, respectively, while that of the raw carbon black is 0.3546 nm. The average lattice spacing d(002) of the etched carbon black is smaller than that of the raw carbon black, indicating that etching reduces the lattice spacing and improves the crystallinity of the carbon black. Additionally, the average lattice spacing d(002) of the carbon black prepared in Examples 1 to 3 is close to or less than 0.3500 nm, confirming that the carbon black from Examples 1 to 3 is graphitic carbon, which enhances its stability. The average lattice spacing d(002) of the commercially available carbon black in Comparative Example 2 is 0.3591 nm, and the d(002) values of Examples 1 to 3 are significantly smaller than that of Comparative Example 2, indicating that the carbon black prepared in Examples 1 to 3 has a higher degree of graphitization than the commercially available carbon black. Furthermore, the average lattice spacing d(002) of the carbon black prepared in Comparative Example 1 is 0.3725 nm, much higher than that of graphitic carbon, suggesting that excessive etching reduces the graphitization degree of the carbon black.

Further calculation based on the XRD data in FIG. 15 shows that the microcrystalline sizes Lc of the carbon black prepared in Examples 1 to 3 of the present disclosure are 25.17 Å, 22.14 Å, and 20.03 Å, respectively. The microcrystalline size Lc of the raw carbon black is 18.17 Å, while that of the commercially available carbon black in Comparative Example 2 is 17.16 Å. This indicates that the microcrystalline size Lc of the carbon black in the examples is increased by up to 38.5% compared to the raw carbon black, significantly improving the crystallinity of the carbon black-consistent with the analysis of the average lattice spacing d(002). Meanwhile, the microcrystalline size Lc of the carbon black prepared in the examples is also significantly larger than that of the commercially available carbon black, confirming that the carbon black of the present disclosure has a higher degree of graphitization. Additionally, the microcrystalline size Lc of the carbon black prepared in Comparative Example 1 is 11.02 Å, much lower than those of Examples 1 to 3 and Comparative Example 2. It is analyzed that this may be due to severe etching leading to dissociation of crystallites, which greatly reduces the microcrystalline size Lc of the carbon black in Comparative Example 1 and thus decreases its crystallinity.

Experimental Example 4

The performance of the batteries prepared in Example 4 and Comparative Examples 1-2 was tested using the following methods:

(1) Low-temperature discharge test at -20°C: The assembled button cells were first rested at room temperature for 16 hours, followed by three cycles of 0.1C low-current charge-discharge. The cells were then transferred to a 25°C thermostatic chamber for 1C charge-discharge and then fully charged. Subsequently, the fully charged cells were placed in a -20°C thermostatic chamber and rested for 12 hours. Finally, 1C discharge was performed, and the -20°C low-temperature discharge efficiency was defined as the ratio of the discharge capacity at -20°C to that at 25°C.

(2) High-temperature discharge test at 55°C: The assembled button cells were first rested at room temperature for 16 hours, followed by three cycles of 0.1C low-current charge-discharge. The cells were then transferred to a 25°C thermostatic chamber for 1C charge-discharge and then fully charged. Subsequently, the fully charged cells were placed in a 55°C thermostatic chamber and rested for 5 hours. Finally, 1C discharge was performed, and the 55°C high-temperature discharge efficiency was defined as the ratio of the discharge capacity at 55°C to that at 25°C.

The specific test results are shown in Table 6.

Table 6 Battery performance test results of different examples and comparative examples

| Product/Parameter | Discharge Efficiency at -20 °C | Discharge Efficiency at 55 °C |
|---|---|---|
| Example 4-1 | 56.3% | 102.5% |
| Example 4-2 | 56.9% | 102.1% |
| Example 4-3 | 57.5% | 101.5% |
| Comparative Example 1-1 | 56.0% | 100.6% |

At low temperatures, lithium ions have lower energy and poorer transport ability. Since ion transport must overcome the contact interface barrier between particles, at the same additive amount, carbon black with a higher specific surface area can distribute more particles covering the surface of active particles. This forms a good conductive network, shortens the ion transport path, and improves the conductivity of active materials at low temperatures. Meanwhile, carbon black with high crystallinity reduces surface resistivity and enhances electron migration rate, which is conducive to the discharge capacity at low temperatures and thus improves low-temperature discharge efficiency. Although Comparative Example 2 has a higher specific surface area, its low crystallinity and numerous defects result in a lower effective amount of conductive carbon black than that prepared in Example 3 of the present disclosure. As a result, the low-temperature discharge efficiency of the battery in Example 4-3 is slightly better than that of the battery in Comparative Example 2-1.

Discharge at high temperature is conducive to the exertion of the discharge capacity, but for carbon black with a high specific surface area, there are more side reactions at high temperatures, especially for carbon black with low crystallinity, which has more defects and aggravates the occurrence of side reactions. The carbon black in Example 3 and Comparative Example 2 has a high specific surface area and a relatively low crystallinity, and the high-temperature discharge efficiency of the corresponding batteries is lower than that of the batteries corresponding to the carbon black in Examples 1 to 2. Since the crystallinity of the carbon black in Example 3 is higher than that of the carbon black in Comparative Example 2, the high-temperature discharge efficiency of the battery in Example 4-3 is slightly better than that of the battery in Comparative Example 2-1.

In addition, as can be seen from the above test results of low - and high - temperature performance, the carbon black prepared in Comparative Example 1, despite having a relatively high specific surface area, has a low degree of crystallinity, low intrinsic conductivity, and is prone to side reactions. The discharge efficiencies of the button cells prepared with this carbon black at - 20°C and 55°C are both lower than those of the cells prepared with the carbon blacks from other examples.

Finally, it should be noted that the above embodiments are only used to illustrate the technical solutions of the present disclosure, rather than to limit them. Although the present disclosure has been described in detail with reference to the foregoing embodiments, those of ordinary skill in the art should understand that they can still modify the technical solutions described in the foregoing embodiments, or perform equivalent substitutions for some or all of the technical features. These modifications or substitutions do not cause the essence of the corresponding technical solutions to deviate from the scope of the technical solutions of the embodiments of the present disclosure.

**Claims**

1.    An ultra-high structure and high specific surface area carbon black based on high crystallinity, **characterized in that** the carbon black satisfies the following characteristics:

(1) the degree of crystallinity is equal to or more than 39%;
(2) the BET specific surface area ranges from 200 $m^2$/g to 763 $m^2$/g;
(3) the OAN ranges from 334 mL/100g to 548 mL/100g; and
(4) the average particle diameter of primary particles is equal to or less than 35 nm.

2.    The ultra-high structure and high specific surface area carbon black based on high crystallinity according to claim 1, **characterized in that** the carbon black satisfies at least one of the following characteristics:

(1) the microcrystalline size Lc of the carbon black ranges from 20.03 Å to 25.17 Å;
(2) the average lattice spacing d(002) of the carbon black is equal to or less than 0.3534 nm,

preferably, the average lattice spacing d(002) of the carbon black ranges from 0.3479 nm to 0.3534 nm

3. The ultra-high structure and high specific surface area carbon black based on high crystallinity according to claim 1, **characterized in that** the microcrystalline size La of the carbon black ranges from 27.8 Å to 37.5 Å.

4. The ultra-high structure and high specific surface area carbon black based on high crystallinity according to claim 1, **characterized in that** the lattice fringes of the primary particles of the carbon black exhibit an irregular conical hat-shaped morphology or ring-shaped morphology.

5. The ultra-high structure and high specific surface area carbon black based on high crystallinity according to claim 1, **characterized in that** the degree of crystallinity of the carbon black ranges from 39% to 46%.

6. The ultra-high structure and high specific surface area carbon black based on high crystallinity according to claim 1, **characterized in that** the carbon black satisfies at least one of the following characteristics:

   (1) the aggregate size D50 of the carbon black is equal to or less than 95nm;
   (2) the aggregate size D50 of the carbon black is equal to or more than 68nm;
   (3) the average particle diameter of the primary particles of the carbon black ranges from 25 nm to 35 nm;

   wherein the aggregate size of the carbon black is measured by a disc centrifugal sedimentation particle diameter analyzer.

7. The ultra-high structure and high specific surface area carbon black based on high crystallinity according to claim 1, **characterized in that** the carbon black satisfies at least one of the following characteristics:

   (1) the average pore size of the carbon black ranges from 5.86 nm to 9.04 nm;
   (2) the volume of pores with a size of 2 nm to 50 nm in the carbon black measured by nitrogen desorption ranges from 0.3157 $cm^3$/g to 1.2061 $cm^3$/g;
   (3) the proportion of the volume of pores with a size of 2 nm to 50 nm in the total pore volume of the carbon black ranges from 84.6% to 93.8%.

8. A preparation method of the ultra-high structure and high specific surface area carbon black based on high crystallinity according to any one of claims 1-7, **characterized by** comprising the following steps:

   subjecting a raw carbon black which has undergone pretreatment to activation and etching treatment, wherein the activation and etching treatment comprising: heating to a first activation temperature under a protective atmosphere and performing activation treatment under the action of an activation gas; then cooling to a second activation temperature and performing etching treatment under the action of the activation gas; and then cooling to room temperature under the protective atmosphere;
   the pretreatment comprises: treating the raw carbon black in an aqueous solution containing an oxidant at 30°C to 150°C for 0.5 h to 2 h, then washing and drying;
   wherein the first activation temperature ranges from 1100°C to 1500°C, the second activation temperature ranges from 900°C to 1000°C, and the degree of crystallinity of the raw carbon black is equal to or more than 44%.

9. The preparation method according to claim 8, **characterized in that** the BET specific surface area of the raw carbon black ranges from 60 $m^2$/g to 150 $m^2$/g,
   preferably, the raw carbon black is acetylene carbon black.

10. The preparation method according to claim 8, **characterized in that** the activation gas comprises at least one of nitrogen dioxide, nitric oxide, $CO_2$, CO, oxygen, ozone, and water vapor.

11. The preparation method according to claim 8, **characterized in that** the duration of the activation treatment at the first activation temperature ranges from 10 min to 30 min;

   the duration of the etching treatment at the second activation temperature ranges from 30 min to 70 min,
   preferably, the cooling rate during the cooling process ranges from 2°C/min to 4°C/min,
   preferably, the heating rate during the heating process ranges from 4°C/min to 6°C/min,

12. The preparation method according to claim 8, **characterized in that** the oxidant comprises at least one of hydrogen peroxide and an oxygen-containing acid,
preferably, the oxygen-containing acid comprises at least one of nitric acid, sulfuric acid, hypochlorous acid, and perchloric acid.

13. An electrode slurry, comprising the ultra-high structure and high specific surface area carbon black based on high crystallinity according to any one of claims 1-7 or the ultra-high structure and high specific surface area carbon black based on high crystallinity prepared by the preparation method according to any one of claims 8-12.

14. A secondary battery, **characterized by** comprising a positive electrode, a negative electrode, an electrolyte, and a separator, wherein at least one of the positive electrode and the negative electrode is prepared from the electrode slurry according to claim 13.

15. A fuel cell, comprising a catalyst, **characterized in that** the catalyst comprises a carrier and active catalyst particles supported on the carrier, the carrier comprises the ultra-high structure and high specific surface area carbon black based on high crystallinity according to any one of claims 1-7 or the ultra-high structure and high specific surface area carbon black based on high crystallinity prepared by the preparation method according to any one of claims 8-12.

FIG. 1

(a)                    (b)                    (c)

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

Europäisches
Patentamt

European
Patent Office

Office européen
des brevets

# EUROPEAN SEARCH REPORT

**Application Number**

EP 25 17 1615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 701 035 A (JIAOZUO HEXING CHEMICAL IND CO LTD) 15 March 2024 (2024-03-15) * paragraph [0007] - paragraph [0015]; examples 1-3 * * paragraph [0105] - paragraph [0107] * * table 4 * ----- | 1-7, 13-15 | INV. C09C1/48 C09C1/56 H01M4/13 H01M4/62 H01M4/90 H01M8/00 |
| X | KR 2009 0118063 A (BLUECHER GMBH [DE]) 17 November 2009 (2009-11-17) * paragraph [0077] - paragraph [0084] * ----- | 8-12 | |
| A | US 6 120 594 A (CURTIS JOHN CARLETON [US] ET AL) 19 September 2000 (2000-09-19) * the whole document * ----- | 8-12 | |
| A | EP 1 160 198 A1 (TENG CHIEN LANG [TW]; WANG FENG SUNG [TW]) 5 December 2001 (2001-12-05) * the whole document * ----- | 8-12 | |

TECHNICAL FIELDS
SEARCHED       (IPC)

C09C
H01M

The present search report has been drawn up for all claims

| Place of search | Date of completion of the search | Examiner |
|---|---|---|
| The Hague | 25 September 2025 | Eren, Hamit |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 1615

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2025

| Patent document cited in search report | | Publication date | Patent family member(s) | | Publication date |
|---|---|---|---|---|---|
| CN 117701035 | A | 15-03-2024 | CN | 117701035 A | 15-03-2024 |
| | | | WO | 2025138662 A1 | 03-07-2025 |
| KR 20090118063 | A | 17-11-2009 | CN | 101668587 A | 10-03-2010 |
| | | | DE | 102007050971 A1 | 18-09-2008 |
| | | | DE | 202007014890 U1 | 17-04-2008 |
| | | | EP | 2134464 A1 | 23-12-2009 |
| | | | ES | 2470616 T3 | 24-06-2014 |
| | | | IL | 200799 A | 27-06-2013 |
| | | | JP | 5602435 B2 | 08-10-2014 |
| | | | JP | 2010520806 A | 17-06-2010 |
| | | | KR | 20090118063 A | 17-11-2009 |
| | | | RU | 2009137920 A | 20-04-2011 |
| | | | US | 2012172216 A1 | 05-07-2012 |
| | | | US | 2018125886 A1 | 10-05-2018 |
| | | | WO | 2008110233 A1 | 18-09-2008 |
| US 6120594 | A | 19-09-2000 | AU | 6041798 A | 18-08-1998 |
| | | | BR | 9807526 A | 21-03-2000 |
| | | | CN | 1251605 A | 26-04-2000 |
| | | | EP | 1036117 A1 | 20-09-2000 |
| | | | ID | 24900 A | 31-08-2000 |
| | | | KR | 20000070598 A | 25-11-2000 |
| | | | US | 6120594 A | 19-09-2000 |
| | | | WO | 9832804 A1 | 30-07-1998 |
| EP 1160198 | A1 | 05-12-2001 | EP | 1160198 A1 | 05-12-2001 |
| | | | TW | 394749 B | 21-06-2000 |
| | | | US | 6337302 B1 | 08-01-2002 |

EPO FORM P0459

For more details about this annex : see Official Journal of the European Patent Office, No. 12/82